# EUROPÄISCHE PATENTSCHRIFT

(11) **EP 1 989 467 B1**
(45) Veröffentlichungstag und Bekanntmachung des Hinweises auf die Patenterteilung: **22.07.2009**
(21) Anmeldenummer: 07711213.4
(22) Anmeldetag: 28.02.2007
(51) Int. Cl.: F16H 55/02

(54) **ZAHNRADANORDNUNG**
TOOTHED WHEEL ARRANGEMENT
ENSEMBLE ROUE DENTÉE

(30) Priorität: 02.03.2006 DE 102006010270
(43) Veröffentlichungstag der Anmeldung: 12.11.2008
(73) Patentinhaber: ZF Friedrichshafen AG, 88038 Friedrichshafen (DE)
(72) Erfinder: BEUTLER, Olaf, 49356 Diepholz (DE); ROGOWSKI, Waldemar, 49504 Lotte/Wersen (DE); BLANKENSPECK, Remt, 49457 Drebber (DE); LOHFINK, Günter, 38667 Bad Harzburg (DE)
(86) Internationale Anmeldenummer: PCT/DE2007/000374
(87) Internationale Veröffentlichungsnummer: WO 2007/098745

(56) Entgegenhaltungen:
- EP-B1- 1 339 596
- WO-A-01/44694
- WO-A-20/05038303
- JP-A- 61 260 181

## Beschreibung

Die Erfindung betrifft eine Zahnradanordnung. Sie bezieht sich insbesondere auf eine Anordnung mit einem Zahnrad, welches aus mehreren Komponenten besteht und insoweit auch als gebautes Zahnrad bezeichnet wird. Bekannte Zahnräder dieser Art bestehen zum Beispiel aus einem Zahnkranz aus Kunststoff und axial beidseitig angeordneten Scheiben beziehungsweise Flanschen zur mechanischen Stabilisierung dieses Zahnkranzes, wobei vorzugsweise mindestens einer der Flansche aus Metall besteht. Hierdurch wird erreicht, dass das entsprechende Zahnrad aufgrund seiner Kunststofflauffläche eine hohe Laufruhe aufweist, aber durch den gleichzeitigen Einsatz metallischer Komponenten auch über die erforderliche mechanische Stabilität und Verschleißfestigkeit verfügt.

Eine Zahnradanordnung mit einem gebauten Zahnrad ist beispielsweise aus der WO 01/44694 A1 bekannt. In der Schrift wird ein zur Montage auf einer Welle oder einem Ritzel vorgesehenes Zahnrad beschrieben, welches aus einem Zahnkranz besteht, welcher zwischen zwei Flanschen angeordnet ist, wobei der Zahnkranz hinsichtlich seiner radialen Erstreckung zweigeteilt ausgebildet ist. Die beiden Segmente des Zahnkranzes werden im Zuge der Montage mittels Schrauben verbunden, welche quer zur Längsachse des Ritzels oder der Welle durch die Segmente des Zahnkranzes geführt sind. Dabei wird der Zahnkranz gemeinsam mit den axial beidseits angeordneten Flanschen auf der Welle oder dem Ritzel montiert, wobei seine Segmente eine an einem der Flansche ausgebildete Nabe umschließen. Der axiale Zusammenhalt des gebauten Zahnrades wird ebenfalls mittels Schrauben hergestellt, welche parallel zur Längsachse des Ritzels oder der Welle zur Verbindung beider Flansche durch den Zahnkranz geführt sind. Nachteilig an dieser Anordnung ist der vergleichsweise hohe Montageaufwand, aber insbesondere die Tatsache, dass die Anordnung, im Hinblick der Lage des gebauten Zahnrades zu der Welle beziehungsweise dem Ritzel, nicht selbstzentrierend ist.

Dem gegenüber haben die aus der EP 1 339 596 B1 und der gattungsgemäßën WO 2005/038303 A1 bekannten Zahnradanordnungen, welche ebenfalls mit einem gebauten Zahnrad realisiert sind, den Vorteil, dass sie aufgrund einer speziellen Ausbildung der Komponenten des gebauten Zahnrades selbstzentrierend sind. Bei ihnen weisen die beiden äußeren, das Zahnrad gemeinsam mit dem Zahnkranz ausbildenden Scheiben beziehungsweise Flansche axial verlaufende Vorsprünge auf, welche den Zahnkranz durchragen und in korrespondierende Vertiefungen der jeweils anderen, gegenüber liegenden äußeren Scheibe eingreifen. Hierdurch wird eine Selbstzentrierung erreicht, welche zu einer verbesserten Kraftübertragung führt. Trotzdem durch die Ausbildungsform außerdem die Montage des Zahnrades erleichtert wird, bleibt der Montageaufwand insoweit immer noch hoch, als die Komponenten des gebauten Zahnrades zur Erreichung eines zuverlässigen Zusammenhaltes bei den in den vorgenannten Schriften offenbarten Lösungen verschraubt oder vernietet werden, wozu entsprechende Schrauben oder Nieten durch weitere, dafür in einem radial inneren Bereich des Zahnkranzes vorgesehene Durchbrüche geführt werden. Zudem ist die Vielzahl der einerseits für die formschlüssige Verbindung der Flansche sowie andererseits für die Schrauben oder Nieten an dem Zahnkranz vorzusehenden Durchbrüche im Hinblick auf dessen Fertigung in einem Spritzgussprozess als nachteilig anzusehen. Der Zahnkranz ist insoweit gewissermaßen nicht kunststoffgerecht ausgelegt.

Aufgabe der Erfindung ist es, eine Zahnradanordnung anzugeben, welche die vorgenannten Nachteile des Standes der Technik vermeidet. Die entsprechende Zahnradanordnung mit einem gebauten Zahnrad soll dazu einerseits selbstzentrierend ausgebildet sein und andererseits einen einfachen Aufbau aufweisen, welcher zu einem geringen Montageaufwand führt.

Die Aufgabe wird durch eine Zahnradanordnung mit den Merkmalen des Hauptanspruchs gelöst. Vorteilhafte Aus- beziehungsweise Weiterbildungen der Erfindung sind durch die Unteransprüche gegeben.

Die vorgeschlagene Zahnradanordnung weist mindestens ein gebautes Zahnrad auf, welches zur drehfesten Montage auf einer Welle oder einem Ritzel vorgesehen ist. Das Zahnrad besteht im Wesentlichen aus einem Zahnkranz und aus zwei, axial beidseitig des Zahnkranzes angeordneten Flanschen. Die Flansche sind mit dem Zahnkranz in einem sie gegen den Zahnkranz radial und torsional fixierenden Formschluss zusammengefügt. An mindestens einem der Teile des gebauten Zahnrades ist eine Nabe ausbildet, auf welche die jeweils anderen Teile des gebauten Zahnrades aufgeschoben sind.

In erfindungswesentlicher Weise sind die Teile des gebauten Zahnrades in der axialen Richtung unter Verzicht auf den Zahnkranz durchragende Nieten, Schrauben oder dergleichen zusammengefügt. Vielmehr sind sie in der axialen Richtung durch eine Klemmverbindung fixiert und zusammengehalten, welche mittels mindestens eines Klemmrings realisiert ist, der mit einer auf dem Umfang der Nabe oder der Welle beziehungsweise des Ritzels umlaufenden Nut in Eingriff gebracht ist. Der oder die Klemmring drücken federnd gegen die dem Zahnkranz abgewandte axiale Außenfläche des jeweiligen Flansches. Hierbei gelangen miteinander korrespondierende Erhöhungen und Vertiefungen auf den axialen Außenflächen des Zahnkranzes sowie den axial inneren Flächen der Flansche miteinander in Eingriff. Dabei können sowohl die Erhöhungen als auch die korrespondierenden Vertiefungen am Zahnkranz und/oder an den Flanschen ausgebildet sein. In jedem Falle wird jedoch der Zahnkranz, abweichend vom Stand der Technik, weder durch Nieten oder Schrauben noch durch die vorgenannten, gegebenenfalls an den Flanschen ausgebildeten Erhöhungen durchragt, so dass der Zahnkranz im Hinblick auf die geringe Anzahl vorzusehender Durchbrüche, insbesondere für den Fall seiner Herstellung aus Kunststoff, aus fertigungstechnischer Sicht vorteilhaft ausgebildet ist.

Die bereits erwähnte Nabe kann gemäß einer möglichen Ausbildungsform durch einen Absatz an der axial inneren, dem Zahnkranz zugewandten Seite eines der Flansche ausgebildet sein. In diesem Falle sind der Zahnkranz und der andere Flansch auf diese Nabe aufgeschoben. Eine weitere Möglichkeit ist dadurch gegeben, dass an dem Zahnkranz axial beidseitig entsprechende Absätze ausgebildet sind, durch welche die Nabe realisiert ist, auf welche von jeweils einer Seite ein Flansch aufgeschoben ist.

Auch für die Ausbildung der Klemmverbindung gibt es in Abhängigkeit der sonstigen Konfiguration der Zahnradanordnung unterschiedliche Möglichkeiten. Entsprechend einer möglichen Ausbildungsform sind dabei an beiden axialen Seiten des Zahnrades Klemmringe angeordnet, welche jeweils mit einer Nut in Eingriff stehen und federnd gegen die axiale Außenfläche des jeweiligen Flansches drücken. Zur drehfesten Anordnung des Zahnrades auf der Welle oder dem Ritzel ist aber auch eine Ausbildungsform denkbar, bei welcher einer der Flansche einstückig mit der Welle beziehungsweise dem Ritzel ausgebildet ist. In diesem Falle ist es ausreichend, die Klemmverbindung mittels nur eines Klemmringes zu realisieren. Dieser Klemmring drückt dabei in axialer Richtung gegen die axial äußere Seite des Flansches, welcher zusammen mit dem Zahnkranz auf die an dem anderen Flansch ausgebildete Nabe aufgeschoben ist. Die drehfeste Anordnung des Zahnrades auf der Welle beziehungsweise dem Ritzel ergibt sich einerseits durch die einstückige Ausbildung des einen Flansches mit der Welle beziehungsweise dem Ritzel und andererseits durch die axiale Fixierung der beiden anderen, das Zahnrad ausbildenden Komponenten an diesem einstückig mit der Welle beziehungsweise dem Ritzel ausgebildeten Flansch.

Grundsätzlich kann die beziehungsweise können die Nuten, mit welcher beziehungsweise welchen die Klemmringe in Eingriff gebracht werden, je nach Ausführungsform entweder auf der Welle beziehungsweise dem Ritzel oder aber auch auf der Nabe ausgebildet sein. Gemäß einer praxisrelevanten Variante der zuvor beschriebenen Ausbildungsform, mit dem einstückig mit der Welle verbundenen Flansch, ist der in diesem Falle eine, die Klemmverbindung bewirkende Klemmring mit einer auf der Welle beziehungsweise dem Ritzel umlaufenden Nut in Eingriff gebracht. Gegebenenfalls können bei dieser Ausbildungsform der Zahnkranz und der einstückig mit der Welle ausgebildete Flansch aus Kunststoff bestehen, während der andere Flansch aus Metall ist. Hierdurch weist das mit einem Kunststoffzahnkranz ausgestatte Zahnrad der Anordnung eine hohe Laufruhe auf, wobei es andererseits durch den metallischen Flansch die erforderliche mechanische Stabilität besitzt. Die Fertigung einer entsprechenden Anordnung kann dabei vorteilhaft in der Weise erfolgen, dass der einstückig mit der (dem) ebenfalls aus Metall bestehenden Welle (Ritzel) ausgebildete Flansch durch Umspritzen der Welle beziehungsweise des Ritzels in einem Spritzgussprozess realisiert wird.

Entsprechend einer vorteilhaften Weiterbildung der Erfindung sind zwischen den Flanschen und dem Zahnkranz elastomere Dämpfungselemente eingeordnet. Diese sind vorzugsweise als O-Ringe ausgebildet, welche an ihrem Umfang mehrere Fortsätze aufweisen, die im montierten Zustand des Zahnrades zwischen entsprechenden, am Zahnkranz oder den Flanschen ausgebildeten Erhebungen angeordnet sind. Hierdurch wird insbesondere eine sehr gute radiale und torsionale Dämpfung der Anordnung erreicht, wobei die spezielle Ausbildung der Dämpfungselemente in Form der O-Ringe in vorteilhafter Weise eine Beeinflussung des Kennungsverhaltens bezogen auf die radiale und/oder torsionale Dämpfung ermöglicht.

Die Erfindung soll nachfolgend anhand eines Ausführungsbeispiels nochmals erläutert werden. In den zugehörigen Zeichnungen zeigen:
- Figur 1:: Die Explosionsdarstellung einer möglichen Ausbildungsform der erfindungsgemäßen Zahnradanordnung
- Figur 2:: Die Ausbildungsform nach Figur 1 in einer Schnittdarstellung.

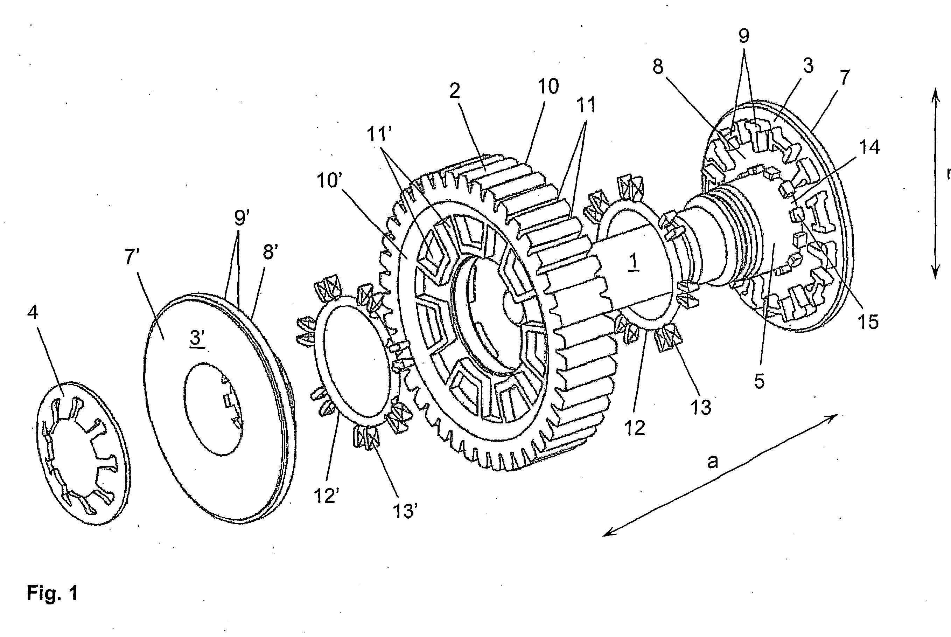

Die Figur 1 zeigt eine mögliche Ausbildungsform der erfindungsgemäßen Zahnradanordnung mit einem gebauten Zahnrad 2, 3, 3' in einer Explosionsdarstellung. Die beispielhaft dargestellte Ausbildungsform betrifft ein drehfest auf einem Ritzel 1 montiertes beziehungsweise zu montierendes gebautes Zahnrad 2, 3, 3'. Das gebaute Zahnrad 2, 3, 3' besteht gemäß dem Beispiel im Wesentlichen aus dem Zahnkranz 2 und zwei mit diesem Zahnkranz 2 zusammenzufügenden Flanschen 3, 3', von denen je einer auf einer axialen Außenseite 10, 10' des Zahnkranzes 2 angeordnet ist beziehungsweise wird. An einem der beiden Flansche 3 ist ein Absatz ausgebildet, welcher eine Nabe' 5 ausbildet, auf die der Zahnkranz 2 und der andere Flansch 3', im Zuge der Montage des Zahnrades 2, 3, 3' auf dem Ritzel 1, aufgeschoben werden. Die Komponenten des Zahnrades 2, 3, 3' werden bei dessen Montage auf dem Ritzel 1 zusammengefügt. An den, bezogen auf die Gesamtanordnung axial inneren Seiten 8, 8' der Flansche 3, 3' sind auf dem Umfang verteilt mehrere sich in axialer Richtung erstreckende Erhöhungen 9, 9' ausgebildet. Diese gelangen im Zuge der Montage mit korrespondierenden Vertiefungen 11, 11' auf den axialen Außenflächen 10,10' des Zahnkranzes 2 in Eingriff, ohne dass sie dabei den Zahnkranz 2 durchragen würden. In dem dargestellten Beispiel sind außerdem zwischen dem Zahnkranz 2 und den Flanschen 3, 3' O-Ringe 12, 12' aus einem elastischen Material eingefügt, welche als Dämpfungselemente wirken. Durch die O-Ringe 12, 12' ist die Zahnradanordnung mit einer insbesondere in torsionaler Richtung und in radialer Richtung r vorteilhaft wirkenden Dämpfung ausgestattet. In dem durch die spezielle Formgestaltung ihrer axialen Flächen gegebenen Formschluss werden die das gebaute Zahnrad 2, 3, 3' ausbildenden Komponenten durch eine Klemmverbindung fixiert. Dazu wird von mindestens einer axialen Außenseite 7' ein Klemmring 4 gegen den entsprechenden Flansch 3' gedrückt, welcher in einer dazu vorgesehenen Nut 6 einrastet. In dem gezeigten Beispiel ist der, den Absatz zur Ausbildung der Nabe 5 aufweisende Flansch 3 einstückig mit dem Ritzel 1 ausgebildet, auf welches das gebaute Zahnrad 2,3,3' montiert wird. Insoweit ist auf einer Seite eine axiale Fixierung bereits durch die Einstückigkeit des entsprechenden Flansches 3 mit dem Ritzel 1 gegeben. Folglich ist eine entsprechende Klemmverbindung mittels eines Klemmrings 4 lediglich auf der anderen axialen Außenseite 7' erforderlich. Je nach dem Einsatzfall und der dadurch bedingten konkreten Ausbildung der Anordnung, bei welcher gegebenenfalls keiner der Flansche 3, 3' einstückig mit der Welle oder dem Ritzel 1 verbunden ist, kann es aber auch erforderlich sein, die Anordnung beidseits mittels eines entsprechenden Klemmrings 4 zu fixieren.

Bei der dargestellten Ausbildungsform wird der Klemmring 4 von der dem einstückig mit dem Ritzel 1 verbundenen Flansch 3 gegenüberliegenden axialen Außenseite auf das Ritzel 1 aufgeschoben und gelangt mit einer auf dem Umfang des Ritzels 1 umlaufenden Nut 6 in Eingriff, welche hinsichtlich der axialen Erstreckung des Ritzels 1 entsprechend der vorgesehenen Positionierung für das Zahnrad 2, 3, 3' angeordnet ist. In dem gezeigten Beispiel ist es aber auch denkbar, dass die an diesem Flansch 3 ausgebildete Nabe 5 den Zahnkranz 2 sowie den gegenüberliegenden Flansch 3' durchragt und die zum Einrasten des Klemmrings 4 erforderliche Nut in dem durchragenden Bereich auf dem Außenumfang der Nabe 5 vorgesehen ist. In jedem Falle ist die Nut 5 so positioniert, dass der Klemmring 4, welcher mit ihr in Eingriff gelangt, gegen die axiale Außenfläche 7' des Flansches 3' drückt und somit den Flansch 3' und den Zahnkranz 2 gemeinsam gegen den gegenüberliegenden Flansch 3 drückt. Hierdurch sind eine zuverlässig axiale Fixierung der Zahnradkomponenten und deren sicherer Zusammenhalt gewährleistet, ohne dass es dazu einer zusätzlichen Schraub- oder Nietverbindung bedarf. Da der Zahnkranz 2, 3, 3' aufgrund der erfindungsgemäßen Ausbildung der Zahnradanordnung, abgesehen von dem mittleren Bereich, in welchem er durch die Nabe 5 des Flansches 3 durchragt wird, keinerlei Durchbrüche aufweist, ist dessen Form im Hinblick auf das zu seiner Herstellung zum Einsatz gelangende Spritzgussverfahren deutlich günstiger als bei anderen, aus dem Stand der Technik bekannten Lösungen.

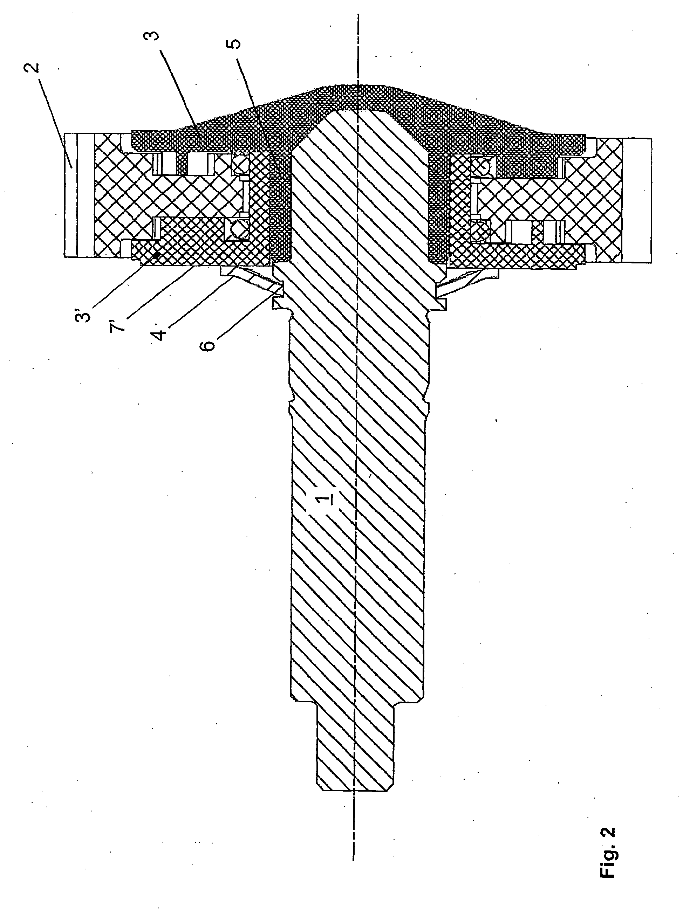

Die Figur 2 zeigt die zuvor erläuterte Anordnung gemäß der Figur 1 nochmals in einer axial geschnittenen Darstellung im montierten Zustand. Insbesondere der durch die Klemmverbindung gegebene Zusammenhalt der Komponenten des gebauten Zahnrades 2, 3, 3' ist in dieser Darstellung gut erkennbar. Wie ersichtlich, ist der Klemmring 4 bei der Montage der Anordnung mit einer auf dem Außenumfang des Ritzels 1 umlaufenden Nut 6 in Eingriff gelangt. Aufgrund seiner entsprechenden Formgebung drückt der Klemmring 4 in der Art einer Klemmfeder gegen die übrigen Komponenten des Zahnrades 2, 3, 3' und fixiert diese in ihrer Anordnung zueinander.

### Bezugszeichenliste

- 1: Welle oder Ritzel
- 2, 3, 3': gebautes Zahnrad, mit 2 Zahnkranz 3, 3' Flansch
- 4: Klemmring
- 5: Nabe
- 6: Nut
- 7, 7': axiale Außenfläche
- 8, 8': innere axiale Seitenfläche
- 9,9': Erhöhung
- 10, 10': axiale Seitenfläche des Zahnkranzes
- 11, 11': Vertiefung
- 12, 12': Dämpfungselement (O-Ring)
- 13, 13': Fortsatz
- 14: Zwischenraum
- 15: Erhebung

- a: axiale Richtung
- r: radiale Richtung

## Patentansprüche

1. Zahnradanordnung mit mindestens einem zur drehfesten Montage auf einer Welle oder einem Ritzel (1) vorgesehenen gebauten Zahnrad (2, 3, 3'), welches aus einem Zahnkranz (2) und axial beidseitig des Zahnkranzes (2) angeordneten Flanschen (3, 3') besteht, die mit dem Zahnkranz (2) in einem sie gegen den Zahnkranz (2) radial und torsional fixierenden Formschluss zusammengefügt sind, wobei an einem der Teile des Zahnrades (2, 3, 3') mindestens eine Nabe (5) ausgebildet ist, auf welche die anderen Teile des Zahnrades (2, 3, 3') aufgeschoben sind, wobei an den inneren axialen Seitenflächen (8, 8') der Flansche (3, 3') ausgebildete, sich axial (a) in Richtung des Zahnkranzes (2) erstreckende Erhöhungen (9, 9') mit auf den axialen Seiteflächen (10, 10') des Zahnkranzes (2) ausgebildeten korrespondierenden Vertiefungen (11, 11') oder an den inneren axialen Seitenflächen (8, 8') der Flansche (3, 3') ausgebildete Vertiefungen mit auf den axialen Seitenflächen (10, 10') des Zahnkranzes (2) ausgebildeten, sich axial (a) in Richtung der Flansche (3, 3') erstreckenden korrespondierenden Erhöhungen in Eingriff gelangen, **dadurch gekennzeichnet, dass** die Teile des Zahnrades (2, 3, 3') in axialer Richtung (a) durch eine Klemmverbindung zusammengehalten und gegeneinander fixiert sind, welche mittels mindestens eines Klemmrings (4) realisiert ist, der mit einer auf dem Umfang der Nabe (5) oder der Welle beziehungsweise des Ritzels (1) umlaufenden Nut (6) in Eingriff gebracht ist und federnd gegen die dem Zahnkranz (2) abgewandte axiale Außenfläche (7, 7') eines der Flansche (3, 3') drückt.

2. Zahnradanordnung nach Anspruch 1, **dadurch gekennzeichnet, dass** die Nabe (5) durch einen Absatz an der axial inneren, dem Zahnkranz (2) zugewandten Seite (9) eines der Flansche (3) ausgebildet ist.

3. Zahnradanordnung nach Anspruch 1, **dadurch gekennzeichnet, dass** die Nabe (5) durch zwei Absätze an beiden axialen Außenseiten (10, 10') des Zahnrades (2) ausgebildet ist.

4. Zahnradanordnung nach einem der Ansprüche 1 bis 3, **dadurch gekennzeichnet, dass** an beiden axialen Seiten des Zahnrades (2, 3, 3') ein jeweils mit einer Nut (6) in Eingriff stehender und federnd gegen die axiale Außenfläche des jeweiligen Flansches (3, 3') drückender Klemmring (4) angeordnet ist.

5. Zahnradanordnung nach Anspruch 1 oder 2 mit einer durch einen Absatz an einem der beiden Flansche (3, 3') gebildeten Nabe (5), **dadurch gekennzeichnet, dass** der, den Absatz zur Ausbildung der Nabe (5) aufweisende Flansch (3) einstückig mit der Welle oder dem Ritzel (1) ausgebildet ist und das Zahnrad (2, 3, 3') in der axialen Richtung (a) durch die einstückige Ausbildung dieses Flansches (3) mit der Welle oder dem Ritzel (2) und einen Klemmring (4) zusammengehalten ist, welcher in axialer (a) Richtung gegen die axial äußere Seite (7') des anderen, zusammen mit dem Zahnkranz (2) auf die an dem ersten Flansch (3) ausgebildete Nabe (5) aufgeschobenen Flansches (3') drückt, so dass das gesamte Zahnrad (2, 3, 3') hierdurch drehfest auf der Welle oder dem Ritzel (1) angeordnet ist.

6. Zahnradanordnung nach Anspruch 5, **dadurch gekennzeichnet, dass** der Zahnkranz (2) und der Flansch (3) aus Kunststoff bestehen, während der Flansch (3') aus Metall ist, wobei der Flansch (3) durch Umspritzen der aus Metall bestehenden Welle beziehungsweise des aus Metall bestehenden Ritzels (1) gebildet ist.

7. Zahnradanordnung nach Anspruch 5 oder 6, **dadurch gekennzeichnet, dass** der Klemmring (4) mit einer auf der Welle beziehungsweise dem Ritzel (1) umlaufenden Nut (6) in Eingriff steht.

8. Zahnradanordnung nach einem der Ansprüche 1 bis 7, **dadurch gekennzeichnet, dass** zwischen dem Zahnkranz (2) und den Flanschen (3, 3') des Zahnrades (2, 3, 3') elastomere Dämpfungselemente (12, 12') angeordnet sind.

9. Zahnradanordnung nach Anspruch 8, **dadurch gekennzeichnet, dass** die Dämpfungselemente (12, 12') als O-Ringe ausgebildet sind, welche mehrere auf ihrem Umfang radial (r) nach außen aufragende Fortsätze (13, 13') aufweisen, die in Zwischenräume (14) von den Flanschen (3, 3') oder/und dem Zahnkranz (2) in axialer Richtung (a) aufragender Erhebungen (15) hineinragen.

## Claims

1. Gearwheel arrangement having at least one constructed gearwheel (2, 3, 3'), which is provided for rotationally fixed mounting, on a shaft or a pinion (1) and comprises a ring gear (2') and flanges (3, 3'), which are disposed axially on either side of the ring gear (2) and assembled with the ring gear (2) in a positive engagement that fixes the flanges radially and torsionally against the ring gear (2), wherein there is formed on one of the parts of the gearwheel (2, 3, 3') at least one hub (5), onto which the other parts of the gearwheel (2, 3, 3') are slipped, wherein raised portions (9, 9') formed on the inner axial side faces (8, 8') of the flanges (3, 3') and extending axially (a) in the direction of the ring gear (2) come into engagement with corresponding recesses (11, 11') formed on the axial side faces (10, 10') of the ring gear (2) or recesses formed on the inner axial side faces (8, 8') of the flanges (3, 3') come into engagement with corresponding raised portions formed on the axial side faces (10, 10') of the ring gear (2) and extending axially (a) in the direction of the flanges (3, 3'), **characterized in that** the parts of the gearwheel (2, 3, 3') are held together and fixed against one another in axial direction (a) by means of a clamping connection, which is realized by means of at least one clamping ring (4) that is brought into engagement with a circumferential groove (6) on the circumference of the hub (5) or of the shaft and/or pinion (1) and presses resiliently against the axial outer face (7, 7') of one of the flanges (3, 3') that is remote from the ring gear (2).

2. Gearwheel arrangement according to claim 1, **characterized in that** the hub (5) is formed by a shoulder on the axially inner side (9) of one of the flanges (3) that faces the ring gear (2).

3. Gearwheel arrangement according to claim 1, **characterized in that** the hub (5) is formed by two shoulders on both axially outer sides (10, 10') of the ring gear (2).

4. Gearwheel arrangement according to one of claims 1 to 3, **characterized in that** disposed on both axial sides of the gearwheel (2, 3, 3') is a clamping ring (4), which in each case is in engagement with a groove (5) and presses resiliently against the axially outer face of the respective flange (3, 3').

5. Gearwheel arrangement according to claim 1 or 2 having a hub (5) formed by a shoulder on one of the two flanges (3, 3'), **characterized in that** the flange (3) having the shoulder that forms the hub (5) is constructed integrally with the shaft or the pinion (1) and the gearwheel (2, 3, 3') is held together in the axial direction (a) by means of the integral construction of said flange (3) with the shaft or the pinion (1) and by means of a clamping ring (4) that presses in axial (a) direction against the axially outer side (7') of the other flange (3'), which is slipped together with the ring gear (2) onto the hub (5) formed on the first flange (3), with the result that the entire gearwheel (2, 3, 3') is disposed in a rotationally fixed manner on the shaft or the pinion (1).

6. Gearwheel arrangement according to claim 5, **characterized in that** the ring gear (2) and the flange (3) are made of plastics material, while the flange (3') is made of metal, wherein the flange (3) is formed by being injection-moulded around the metal shaft and/or the metal pinion (1).

7. Gearwheel arrangement according to claim 5 or 6, **characterized in that** the clamping ring (4) is in engagement with a circumferential groove (6) on the shaft and/or the pinion (1).

8. Gearwheel arrangement according to one of claims 1 to 7, **characterized in that** elastomer damping elements (12, 12') are disposed between the ring gear (2) and the flanges (3, 3') of the gearwheel (2, 3, 3').

9. Gearwheel arrangement according to claim 8, **characterized in that** the damping elements (12, 12') take the form of O-rings, which have on their circumference a plurality of outwardly projecting extensions (13, 13') that engage into gaps (14) of raised portions (15) projecting in axial direction (a) from the flanges (3, 3') or/and the ring gear (2).

## Revendications

1. Dispositif de roue d'engrenage comprenant au moins une roue dentée (2, 3, 3') installée en prévision du montage solidaire en rotation sur un arbre ou un pignon (1), qui est constituée d'une couronne dentée (2) et de brides (3, 3') aménagées axialement de part et d'autre de la couronne dentée (2), qui sont assemblées avec la couronne dentée (2) dans une adaptation de formes les fixant radialement et en torsion contre la couronne dentée (2), dans lequel il est formé, sur une des parties de la roue dentée (2, 3, 3'), au moins un moyeu (5), sur lequel sont enfilées les autres parties de la roue dentée (2, 3, 3'), dans lequel des élévations (9, 9') formées sur les faces latérales internes axiales (8, 8') des brides (3, 3') et s'étendant axialement (a) dans la direction de la couronne dentée (2) viennent en prise avec des évidements correspondants (11, 11') formés sur les faces latérales axiales (10,10') de la couronne dentée (2) ou des évidements formés sur les faces latérales internes axiales (8, 8') des brides (3, 3') viennent en prise avec des élévations correspondantes formées sur les faces latérales axiales (10,10') de la couronne dentée (2) et s'étendant axialement (a) dans la direction des brides (3, 3'), **caractérisé en ce que** les parties de la roue dentée (2, 3, 3') sont solidarisées et fixées l'une à l'autre dans la direction axiale (a) par un raccord de serrage, qui est réalisé au moyen d'au moins un anneau de serrage (4), qui est amené en prise avec une rainure (6) parcourant la périphérie du moyeu (5) ou de l'arbre ou du pignon (1) et qui exerce une pression élastique contre la face externe axiale (7,7') d'une des brides (3, 3') opposée à la couronne dentée (2).

2. Dispositif de roue d'engrenage selon la revendication 1, **caractérisé en ce que** le moyeu (5) est formé par un épaulement sur la face (9) axialement interne, tournée vers la couronne dentée (2), d'une des brides (3).

3. Dispositif de roue d'engrenage selon la revendication 1, **caractérisé en ce que** le moyeu (5) est formé par deux épaulements sur les deux faces externes axiales (10, 10') de la roue dentée (2).

4. Dispositif de roue d'engrenage selon l'une quelconque des revendications 1 à 3, **caractérisé en ce que** l'on agence, des deux côtés axiaux de la roue dentée (2, 3, 3'), un anneau de serrage (4) respectivement en prise avec une rainure (6) et exerçant une pression élastique contre la face externe axiale de la bride respective (3, 3').

5. Dispositif de roue d'engrenage selon la revendication 1 ou 2 comprenant un moyeu (5) formé par un épaulement sur l'une des deux brides (3, 3'), **caractérisé en ce que** la bride (3) présentant l'épaulement pour la formation du moyeu (5) est réalisée d'un seul tenant avec l'arbre ou le pignon (1) et **en ce que** la roue dentée (2, 3, 3') est maintenue dans la direction axiale (a) par la formation d'un seul tenant de cette bride (3) avec l'arbre ou le pignon (1) et un anneau de serrage (4), qui exerce une pression dans la direction axiale (a) contre le côté axialement externe (7') de l'autre bride (3') enfilée conjointement avec la couronne dentée (2) sur le moyeu (5) formé sur la première bride (3), de manière à agencer ainsi l'ensemble de la roue dentée (2, 3, 3') de manière solidaire en rotation sur l'arbre ou le pignon (1).

6. Dispositif de roue d'engrenage selon la revendication 5, **caractérisé en ce que** la couronne dentée (2) et la bride (3) sont constituées d'un matériau synthétique, tandis que la bride (3') est en métal, dans lequel la bride (3) est formée par enrobage par extrusion de l'arbre constitué de métal ou du pignon (1) constitué de métal.

7. Dispositif de roue d'engrenage selon la revendication 5 ou 6, **caractérisé en ce que** l'anneau de serrage (4) est en prise avec la rainure (6) faisant le tour de l'arbre ou du pignon (1).

8. Dispositif de roue d'engrenage selon l'une quelconque des revendications 1 à 7, **caractérisé en ce que** l'on agence des éléments d'amortissement élastomères (12, 12') entre la couronne dentée (2) et les brides (3, 3') de la roue dentée (2, 3, 3').

9. Dispositif de roue d'engrenage selon la revendication 8, **caractérisé en ce que** les éléments d'amortissement (12, 12') se présentent sous la forme d'anneaux toriques, qui présentent plusieurs prolongements (13, 13') se dressant sur leur pourtour radialement (r) vers l'extérieur, qui s'enfoncent dans des espaces intermédiaires (14) des brides (3, 3') et/ou de la couronne dentée (2) dans la direction axiale (a) d'élévations saillantes (15).
